# EUROPÄISCHE PATENTSCHRIFT

(11) **EP 2 294 329 B1**
(45) Veröffentlichungstag und Bekanntmachung des Hinweises auf die Patenterteilung: **16.11.2011**
(21) Anmeldenummer: 09772192.2
(22) Anmeldetag: 06.07.2009
(51) Int. Cl.: F16D 65/14

(54) **SELBSTVERSTÄRKENDE SCHEIBENBREMSE**
SELF-SERVO DISC BRAKE
FREIN À DISQUE À AUTO-AMPLIFICATION

(30) Priorität: 04.07.2008 DE 102008031442
(43) Veröffentlichungstag der Anmeldung: 16.03.2011
(60) Teilanmeldung: 11158709.3
(73) Patentinhaber: Knorr-Bremse Systeme für Nutzfahrzeuge GmbH, 80809 München (DE)
(72) Erfinder: BAUMGARTNER, Johann, 85368 Moosburg (DE); GRUBER, Robert, 83539 Pfaffing (DE); PERICEVIC, Aleksandar, 80636 München (DE); GEISSLER, Steffen, 63110 Rodgau (DE); TRIMPE, Robert, 82234 Wessling (DE)
(74) Vertreter: Mattusch, Gundula
(86) Internationale Anmeldenummer: PCT/EP2009/004863
(87) Internationale Veröffentlichungsnummer: WO 2010/000492

(56) Entgegenhaltungen:
- WO-A-2005/028905
- WO-A-2007/059895
- WO-A-2008/014927
- DE-B3-102006 036 278

## Beschreibung

Die Erfindung betrifft eine selbstverstärkende Scheibenbremse nach dem Oberbegriff des Anspruchs 1.

Selbstverstärkende Scheibenbremsen, wie sie z.B. aus der DE 10 2006 036 278 B3 bekannt sind, nutzen die bei einer Bremsung auf den Bremsbelag wirkende Umfangskräfte zur Unterstützung der Zuspannkraft, die von einem elektromechanischen Antrieb oder einen pneumatisch betätigten Bremszylinder über eine Zuspanneinrichtung aufgebracht wird. Dadurch kann der Antrieb erheblich kleiner dimensioniert werden.

Diese Selbstverstärkung wird durch eine Selbstverstärkungseinrichtung erreicht, die Bestandteil der Zuspanneinrichtung ist.

Dabei sind in einer Führungsplatte, bezogen auf die Bremsscheibe, in axialer Richtung bewegliche Druckstempel befestigt, die in Korrespondenz mit dem zuspannseitigen Bremsbelag, üblicherweise einer einen Reibbelag tragenden Belagträgerplatte oder einer Belagdruckplatte als Bestandteil des Bremsbelages, jeweils eine Spreizlagerung bilden, wozu jeder Druckstempel stirnseitig eine Lagerkugel aufweist, die in einer mit in Umfangsrichtung der Bremsscheibe von innen nach außen ansteigenden Rampen versehenen Vertiefung einliegt.

Bei einer Bremsung, wenn also der Bremsbelag mittels der Zuspanneinrichtung gegen die Bremsscheibe gepresst wird, bewegt sich der Bremsbelag aufgrund der Reibkräfte beim Anpressen an die Bremsscheibe in deren Drehrichtung, wobei sich gleichzeitig die zugeordnete Rampe entlang der Lagerkugel bewegt, unter Verstärkung der auf die Bremsscheibe wirkenden axial ausgerichteten Bremskraft.

Bei einem Lösen der Bremse wird der Bremsbelag mittels einer Rückstellfeder in eine Ausgangsstellung gebracht, in der die Spreizlagerung praktisch unwirksam ist.

Im Betrieb ergeben sich jedoch Probleme, da die Spreizlagerung weitgehend ungeschützt Witterungs- und Umgebungseinflüssen ausgesetzt ist. Dieser sozusagen offene Betrieb der Spreizlager führt zu starken Verschmutzungen und Korrosionserscheinungen, was den kompletten Ausfalls der Selbstverstärkungseinrichtung zur Folge haben kann, zumindest aber eine Einschränkung der Funktionsfähigkeit.

Der Erfindung liegt die Aufgabe zugrunde, eine selbstverstärkende Scheibenbremse der gattungsgemäßen Art so weiterzuentwickeln, dass ihre Funktionssicherheit dauerhaft verbessert und ihre Standzeit erhöht werden.

Diese Aufgabe wird durch eine Scheibenbremse mit den Merkmalen des Anspruchs 1 gelöst.

Durch die Kapselung der Spreizlagerung in unbetätigter Stellung der Bremse, also wenn beispielsweise die Lagerkugel in einer tiefsten Endstellung in der Vertiefung der Belagdruckplatte einliegt, ist die Spreizlagerung vor Witterungs- und Fahrbetriebseinflüssen so weit geschützt, dass keine Feuchtigkeit und kein Schmutz eindringen kann.

Dabei können die einander zugewandten Flächen des Druckstempels und der Belagdruckplatte im gemeinsamen Überdeckungsbereich dichtend aneinander liegen, wobei durch die Rückstellfeder, mit der der Bremsbelag aus seiner Bremsstellung herausgezogen wird, die Belagdruckplatte bzw. den Bremsbelag gegen den Druckstempel presst. In diesem Fall bilden die Stirnfläche des Druckstempels und die Auflagefläche der Belagdruckplatte die Dichtungsanordnung.

Zum Ausgleich von Toleranzen kann vorzugsweise am Druckstempel ein Dichtungsring vorgesehen sein, der in Ausgangsstellung der Selbstverstärkungseinrichtung dichtend an der Belagdruckplatte bzw. dem Bremsbelag anliegt.

Um den mechanischen, insbesondere auch den thermischen Anforderungen zu genügen, ist dieser Dichtungsring aus einem temperaturbeständigen, jedoch plastifizierbaren Material hergestellt. Hierzu kann der Dichtungsring aus Kupfer oder einem temperaturbeständigen Kunststoff bestehen.

Für einen weiteren Korrosionsschutz sind nach einem Gedanken der Erfindung die Rollkörper des Spreizlagers, also üblicherweise die Lagerkugeln, aus einem rostfreien und verschleißresistenten Material hergestellt. Hierzu sind z.B. härtbare Cr- und Ni-legierte Stähle, Hartmetalle oder Keramiken geeignet.

Gleitlagerschalen, in denen die Rollkörper gelagert sind, können aus einem nicht rostenden oder verzinkten Stahlblech gefertigt sein.

Ein Schutz der Spreizlagerung vor Witterungseinflüssen, vor allem vor im Fahrbetrieb einwirkendem Spritzwasser, bildet eine wannenförmige Gestaltung der Führungsplatte, wobei der Bremsbelag bzw. die Belagdruckplatte, bezogen auf ihre Dicke, teilweise in dieser Wanne einliegt.

Der Wannenrand überragt somit den Bremsbelag seitlich, wodurch, im Zusammenspiel mit einer topfartigen Ausformung der Führungsplatte im Bereich der Aufnahme des Druckstempels, eine labyrinthartige Dichtung gebildet ist, die auch bei einer Bremsung wirksam ist, also wenn der Bremsbelag gegenüber dem Druckstempel bzw. der Führungsplatte durch die Spreizlagerung abständig ist und die Dichtung zwischen dem Druckstempel und der Belagdruckplatte durch die Dichtungsanordnung nicht mehr in dem Maße gegeben ist. Spritz- und Schwallwasser kann durch die wannenförmige Ausbildung der Führungsplatte nicht unmittelbar in den zwischen der Führungsplatte und der Belagdruckplatte gebildeten Spalt eindringen.

Ergänzend oder alternativ kann als Schutz der Spreizlagerung eine entsprechende Dichtung an der jeweiligen Lagerkugel befestigt sein, die so ausgestaltet ist, dass sie zum einen die die Rampen aufweisende Vertiefung und zum anderen den Lagerbereich im Druckstempel, also die genannte Lagerschale, nach außen hin abdichtet.

Weitere vorteilhafte Ausbildungen der Erfindung sind in den Unteransprüchen gekennzeichnet.

Ein Ausführungsbeispiel der Erfindungen wird nachfolgend anhand der beigefiigten Zeichnung beschrieben.

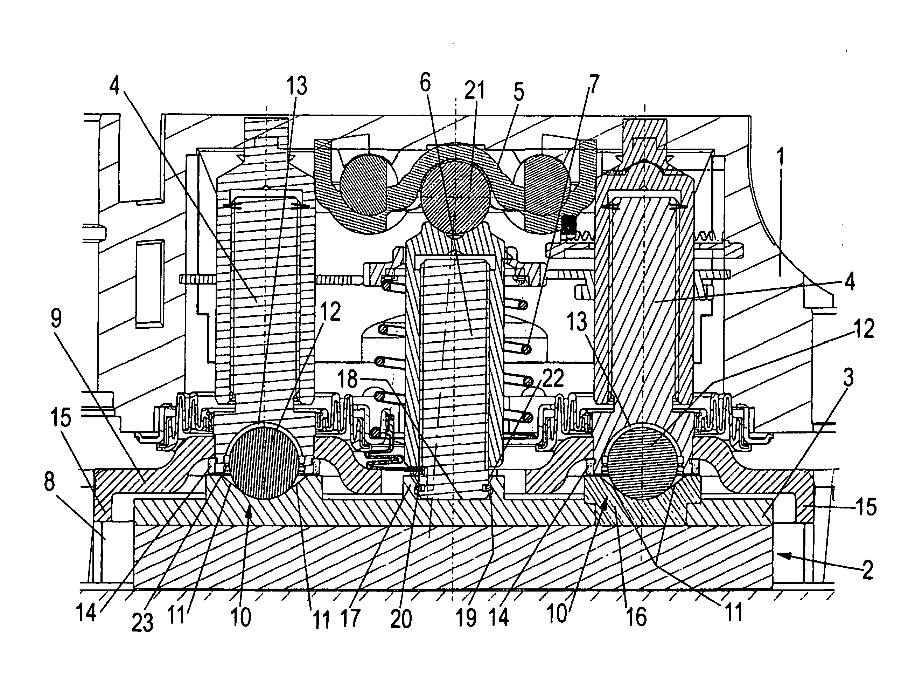

Die einzige Figur zeigt einen Teilausschnitt auf eine erfindungsgemäße Scheibenbremse in einer geschnittenen Draufsicht.

In der Figur ist eine selbstverstärkende Scheibenbremse dargestellt, mit einem an einem ortsfesten Bremsträger 8 gehaltenen Bremssattel 1, einem zuspannseitigen Bremsbelag 2 und einem reaktionsseitigen, die gegen eine Bremsscheibe pressbar sind. Im Beispiel ist lediglich der zuspannseitige Bremsbelag 2 dargestellt.

Zum Zuspannen ist eine Zuspanneinrichtung in Form eines Drehhebels 5 und eines Bremsstempels 6 vorgesehen, über den der Bremsbelag 2 in axialer Richtung, bezogen auf die Drehachse der Bremsscheibe, bewegbar ist.

Weiter ist eine Selbstverstärkungseinrichtung vorgesehen, die Spreizlager 10 aufweist, denen jeweils ein Druckstempel 4 zugeordnet ist, die mit einer Nachstelleinrichtung zur verschleißbedingten Nachstellung des Bremsbelages 2 in Eingriff stehen.

Die Druckstempel 4 sind mit ihrem dem Bremsbelag 2 zugewandten Endbereich in einer Führungsplatte 9 gehalten, die in dem Bremsträger 8 in Zuspannrichtung verschiebbar ist.

Jede Spreizlagerung 10 weist eine im zugeordneten Druckstempel 4 stirnseitig eingelassene und darin in einer Gleitlagerschale 13 positionierte Lagerkugel 12 auf, die andererseits in einer kalottenförmigen Vertiefung einliegt, deren Seitenwand im Sinne von ansteigenden Rampen 11 ausgebildet ist.

Bei einer Bremsung, wenn also mittels des Bremshebels 5 der Bremsbelag 2 gegen die Bremsscheibe gepresst wird, entstehen Umfangskräfte, durch die der Bremsbelag 2 in Drehrichtung der Bremsscheibe verschoben wird, unter Abstandsveränderung des Bremsbelages 2 zum Druckstempel 4.

Beim Lösen der Bremse wird der Bremsbelag 2 durch eine Rückstellfeder 7 in eine sozusagen entspannte Ausgangsstellung zurückgeführt, in der die Lagerkugel 12 praktisch funktionsfrei in der Vertiefung des Bremsbelages 2 einliegt.

In dieser Stellung, die in der Figur erkennbar ist, liegen der Druckstempel 4 und eine Belagdruckplatte 3 des Bremsbelages 2 dicht aneinander, unter Einschluss der Spreizlagerung 10.

Zum Toleranzausgleich ist im Beispiel an dem der Belagdruckplatte 3 zugewandten Ende des Druckstempels 4 ein Dichtring 14 angeordnet, der vorzugsweise aus einem temperaturbeständigen, plastifizierbaren Material besteht und der dichtend an der zugeordneten Fläche der Belagdruckplatte 3 anliegt.

Alternativ oder ergänzend wie im Beispiel, ist an der Lagerkugel 12 ein Dichtring 23 angeordnet, mit dem die Gleitlagerschale 13 und die Spreizlagerung 10 gegenüber der Umgebung abgedichtet sind.

Zur Einbringung der die Rampen 11 aufweisenden Vertiefung kann diese, wie im Beispiel linksseitig dargestellt, einstückig mit der Belagdruckplatte 3 ausgebildet sein. Alternativ besteht auch die Möglichkeit, die Vertiefung in einem separaten Einsatz 16 vorzusehen, der fest mit der Belagdruckplatte 3 verbunden ist.

Die Führungsplatte 9 weist im Bereich ihrer Druckstempelaufnahme eine entgegengesetzt zum Bremsbelag 2 gerichtete Ausstülpung auf, während sie auf ihrer dem Bremsbelag 2 zugewandten Seite mit einem umlaufenden Wannenrand 15 versehen ist, der eine wannenförmige Vertiefung der Führungsplatte 9 begrenzt, in der der Bremsbelag 2 bzw. die Belagdruckplatte 3 bereichsweise einliegt.

Durch den Wannenrand 15 wird wirksam verhindert, dass auch im Fall einer Spreizung des Bremsbelages 2 vom Druckstempel 4 bei einer Bremsung der zwischen der Führungsplatte 9 und der Belagdruckplatte 3 gebildete Spalt spritzwassergeschützt abgedeckt ist.

Der Bremsstempel 6 ist mit seinem zugeordneten Endbereich in einer mit einer Hinterschneidung 19 versehenen Aufnahme 18 so gehalten, dass bei einer bremsbedingten Querverschiebung des Bremsbelages 2 eine Auslenkung möglich ist, wobei eine Kugel 21, mit der sich der Bremsstempel 6 am Bremshebel 5 abstützt, als Schwenklager fungiert.

Die Aufnahme 18 ist in einem angeformten Ansatz 17 der Belagdruckplatte 3 angeordnet, mit einer trichterförmigen Einschuböffnung 22, durch die der Bremsstempel 6 einsteckbar ist.

Zu dessen axialer Sicherung ist in einer umlaufenden Nut des Bremsstempels 6 ein federnder Ring 20 angeordnet, der sich beim Einschieben des Bremsstempels 6 in die Aufnahme 18 zusammendrückt und nach Einführen aufspreizt und an der Hinterschneidung 19 zur Anlage kommt.

### Bezugszeichenliste

- 1: Bremssattel
- 2: Bremsbelag
- 3: Belagdruckplatte
- 4: Druckstempel
- 5: Bremshebel
- 6: Bremsstempel
- 7: Rückstellfeder
- 8: Bremsträger
- 9: Führungsplatte
- 10: Spreizlagerung
- 11: Rampe
- 12: Lagerkugel
- 13: Gleitlagerschale
- 14: Dichtring
- 15: Wannenrand
- 16: Einsatz
- 17: Ansatz
- 18: Aufnahme
- 19: Hinterschneidung
- 20: Ring
- 21: Kugel
- 22: Einschuböffnung
- 23: Dichtring

## Patentansprüche

1. Selbstverstärkende Scheibenbremse, mit
a) einem an einem ortsfesten Bremsträger (8) gehaltenen Bremssattel (1), einem zuspannseitigen (2) und einem reaktionsseitigen Bremsbelag, die gegen eine Bremsscheibe pressbar sind,
b) einer eine Selbstverstärkungseinrichtung sowie einen über einen Bremshebel (5) betätigbaren, an einer Belagdruckplatte (3) angeschlossenen Bremsstempel (6) aufweisende Zuspanneinrichtung und einer Nachstellvorrichtung zum Nachstellen von Belag- und/oder Bremsscheibenverschleiß,
c) wobei die Selbstverstärkungseinrichtung mindestens einen Druckstempel (4) aufweist, der über eine Spreizlagerung (10) stirnseitig an dem zuspannseitigen Bremsbelag (2) anliegt und der mit seinem dem Bremsbelag (2) zugewandten Endbereich in einer im Bremsträger (8) beweglich gehaltenen Führungsplatte (9) festgelegt ist,
**dadurch gekennzeichnet, dass**
d) die Spreizlagerung (10) in Nichtfunktionsstellung der Selbstverstärkungseinrichtung von einer Dichtungsanordnung eingeschlossen ist.

2. Selbstverstärkende Scheibenbremse nach Anspruch 1, **dadurch gekennzeichnet, dass** die Dichtungsanordnung durch die dichtende Anlage der Stirnseite des Druckstempels (4) am Bremsbelag (2) gebildet ist.

3. Selbstverstärkende Scheibenbremse nach Anspruch 1 oder 2, **dadurch gekennzeichnet, dass** an dem dem Bremsbelag (2) zugewandten Endbereich des Druckstempels (4) ein Dichtring (14) befestigt ist, der am Bremsbelag (2) anliegt.

4. Selbstverstärkende Scheibenbremse nach Anspruch 3,
**dadurch gekennzeichnet, dass** der Dichtring (14) aus einem temperaturbeständigen, plastifizierbaren Material besteht.

5. Selbstverstärkende Scheibenbremse nach einem der Ansprüche 3 oder 4, **dadurch gekennzeichnet, dass** der Dichtring (14) aus Kupfer oder einem temperaturbeständigen Kunststoff besteht.

6. Selbstverstärkende Scheibenbremse nach einem der vorhergehenden Ansprüche, **dadurch gekennzeichnet, dass** die die Spreizlagerung (10) bildenden Bauteile aus korrosions- und verschleißfestem Material hergestellt sind.

7. Selbstverstärkende Scheibenbremse nach einem der vorhergehenden Ansprüche, **dadurch gekennzeichnet, dass** die Spreizlagerung (10) eine Lagerkugel (12) aufweist, die im Druckstempel (4) in einer darin befestigten Gleitlagerschale (13) gelagert ist und die aus einem härtbaren Chrom-/Nickel-Stahl, aus Hartmetall oder einer Keramik gebildet ist.

8. Selbstverstärkende Scheibenbremse nach Anspruch 7,
**dadurch gekennzeichnet, dass** die zur Aufnahme der Lagerkugel (12) im Bremsbelag (2) vorgesehene Vertiefung, deren Seitenflächen als ansteigende Rampen (11) ausgebildet sind, in einem mit einer Belagdruckplatte (3) des Bremsbelages (2) verbundenen Einsatz (16) angeordnet ist.

9. Selbstverstärkende Scheibenbremse nach einem de Ansprüche 7 oder 8, **dadurch gekennzeichnet, dass** die die Lagerkugel (12) aufnehmende Vertiefung in die Belagdruckplatte (3) eingebracht ist.

10. Selbstverstärkende Scheibenbremse nach einem der vorhergehenden Ansprüche, **dadurch gekennzeichnet, dass** die Führungsplatte (9) auf ihrer dem Bremsbelag (2) zugewandten Seite einen Wannenrand (15) aufweist, der in gespreizter Funktionsstellung der Spreizlagerung (10) einen zwischen der Führungsplatte (9) und dem Bremsbelag (2) gebildeten Spalt überdeckt.

11. Selbstverstärkende Scheibenbremse nach einem der Ansprüche 7 bis 10, **dadurch gekennzeichnet, dass** die Dichtungsanordnung durch einen an der Lagerkugel (12) angeordneten Dichtungsring (23) gebildet ist.

12. Selbstverstärkende Scheibenbremse nach einem der vorhergehenden Ansprüche, **dadurch gekennzeichnet, dass** die Belagdruckplatte (3) einen Ansatz (17) aufweist, mit einer Aufnahme (18), in der Bremsstempel (6) axial gehalten einliegt.

13. Selbstverstärkende Scheibenbremse nach Anspruch 12,
**dadurch gekennzeichnet, dass** die Aufnahme (18) eine Hinterschneidung (19) aufweist, in die ein Ring (20) des Bremsstempels (6) eingreift.

14. Selbstverstärkende Scheibenbremse nach Anspruch 13,
**dadurch gekennzeichnet, dass** der Ring (20) als Federring ausgebildet ist.

15. Selbstyerstärkende Scheibenbremse nach einem der Ansprüche 12 bis 14, **dadurch gekennzeichnet, dass** die Aufnahme (18) eine trichterförmige Einschuböffnung (22) aufweist.

16. Selbstverstärkende Scheibenbremse nach einem der Ansprüche 14 oder 15, **dadurch gekennzeichnet, dass** der federnde Ring (20) in einer umlaufenden Nut des Bremsstempels (6) radial bewegbar einliegt.

## Claims

1. Self-amplifying disc brake with
a) a brake caliper (1) held on a positionally fixed brake backing plate (8), a brake pad (2) on an application side and one on a reaction side, which can be pressed against a brake disc,
b) an application mechanism comprising a self-amplifying device and a brake plunger (6) that can be actuated by a brake lever (5) and is connected to a pad pressure plate (3), and an adjustment mechanism for compensating wear of the pads and/or the brake disc,
c) such that the self-amplifying device comprises at least one pressure ram (4) which contacts the brake pad (2) on the application side at its end via a splayed bearing (10) and which, with its end area facing toward the brake pad (2), is fixed in a guide plate (9) held movably in the brake backing plate (8),
**characterised in that**
d) in the non-functioning position of the self-amplifying device the splayed bearing (10) is enclosed by a sealing arrangement.

2. Self-amplifying disc brake according to Claim l, **characterised in that** the sealing arrangement is formed by sealing contact of the front end of the pressure ram (4) against the brake pad (2).

3. Self-amplifying disc brake according to either of Claims 1 or 2, **characterised in that** a sealing ring (14), which contacts the brake pad (2), is fixed on the end area of the pressure ram (4) facing toward the brake pad (2).

4. Self-amplifying disc brake according to Claim 3, **characterised in that** the sealing ring (14) consists of a temperature-resistant, plastifiable material.

5. Self-amplifying disc brake according to either of Claims 3 or 4, **characterised in that** the sealing ring (14) is made of copper or a temperature-resistant plastic.

6. Self-amplifying disc brake according to any of the preceding claims, **characterised in that** the components forming the splayed bearing are made from corrosion- and wear-resistant materials.

7. Self-amplifying disc brake according to any of the preceding claims, **characterised in that** the splayed bearing (10) comprises a bearing ball (12) fitted into the pressure ram (4) in a slide bearing shell (13) attached to the latter, and which consists of a hardenable chromium/nickel st5eel, a metal carbide, or a ceramic.

8. Self-amplifying disc brake according to Claim 7, **characterised in that** the recess provided in the brake pad (2) for receiving the bearing ball (12), whose side surfaces are formed as rising ramps (11), is arranged in an insert (16) connected to a pad pressure plate (3) of the brake pad (2).

9. Self-amplifying disc brake according to either of Claims 7 or 8, **characterised in that** the recess that receives the bearing ball (12) is formed in the pad pressure plate (3).

10. Self-amplifying disc brake according to any of the preceding claims, **characterised in that** on its side facing toward the brake pad (2), the guide plate (9) has a shell rim (15) which, in the expanded functional position of the splayed bearing (10), covers a gap formed between the guide plate (9) and the brake pad (2).

11. Self-amplifying disc brake according to any of Claims 7 to 10, **characterised in that** the sealing arrangement is formed by a sealing ring (23) arranged on the bearing ball (12).

12. Self-amplifying disc brake according to any of the preceding claims, **characterised in that** the pad pressure plate (3) has an attachment (17) with a recess (18), in which the brake plunger (6) is held axially.

13. Self-amplifying disc brake according to Claim 12, **characterised in that** the recess (18) has an undercut (19) in which a ring (20) of the brake plunger (6) engages.

14. Self-amplifying disc brake according to Claim 13, **characterised in that** the ring (20) is a spring ring.

15. Self-amplifying disc brake according to any of Claims 12 to 14, **characterised in that** the recess (18) has a funnel-shaped insertion opening (22).

16. Self-amplifying disc brake according to either of Claims 14 or 15, **characterised in that** the spring ring (20) sits in an all-round groove of the brake plunger (6).

## Revendications

1. Frein à disque du type à renfort automatique, comprenant
(a) un étrier de frein (1) retenu sur une plaque d'appui de frein stationnaire (8), une garniture de frein du côté d'application (2) et une garniture de frein du côté de réaction, qui sont aptes à être pressé contre un disque de frein,
(b) un moyen de serrage de frein renfermant un moyen à renfort automatique ainsi qu'un piston de frein, qui est opérable via un levier de frein (5) et relié à une plaque de serrage de garniture (3), et un dispositif de réglage pour le réajustage de l'usure de garniture et/ou du disque de frein,
(c) dans lequel ledit moyen à renfort automatique comprend au moins un piston-chasse (4) qui porte contre ladite garniture de frein (2) du côté de serrage de frein par son côté de face via un appui écarteur (10) et qui est tenu, de manière fixe, dans une plaque de guidage (9) tenue pour mouvement dans ladite plaque d'appui de frein (8) par sa région terminale en face de ladite garniture de frein (2),
**caractérisé en ce que**
(d) en position non-fonctionnelle dudit moyen à renfort automatique, ledit appui écarteur (10) est renfermé par un système d'étanchéité.

2. Frein à disque à renfort automatique selon la revendication 1, **caractérisé en ce que** ledit système d'étanchéité est formé par l'adhérence étanche du côté en face dudit piston-chasse (4) sur ladite garniture de frein (2).

3. Frein à disque à renfort automatique selon la revendication 1 ou 2, **caractérisé en ce qu'**une bague d'étanchéité (14) est fixée sur la région terminale dudit piston-chasse (4), qui se trouve en face de ladite garniture de frein (2), cette bague d'étanchéité portant contre ladite garniture de frein (2).

4. Frein à disque à renfort automatique selon la revendication 3, **caractérisé en ce que** ladite bague d'étanchéité (14) est faite en un matériau plastifiable à résistance thermique.

5. Frein à disque à renfort automatique selon une quelconque des revendications 3 ou 4, **caractérisé en ce que** ladite bague d'étanchéité (14) est faite en cuivre ou en un matériau synthétique à résistance thermique.

6. Frein à disque à renfort automatique selon une quelconque des revendications précédentes, **caractérisé en ce que** les composants, qui constituent ledit appui écarteur (10), sont faits en un matériau résistant à la corrosion et à l'usure.

7. Frein à disque à renfort automatique selon une quelconque des revendications précédentes, **caractérisé en ce que** ledit appui écarteur (10) comprend une sphère d'appui (12), qui s'appuie dans une coquille de support de palier à glissement (13), fixée dans ledit piston-chasse (4) et faite en un acier à chrome/nickel apte au traitement de trempe, un métal dur ou un matériau céramique.

8. Frein à disque à renfort automatique selon la revendication 7, **caractérisé en ce que** l'évidement formé pour la réception de ladite sphère d'appui (12) dans ladite garniture de frein (2), dont les surfaces latérales sont conçues en tant que rampes ascendantes (11), est disposé dans un insert (16) relié à une plaque de serrage de garniture (3) de ladite garniture de frein (2).

9. Frein à disque à renfort automatique selon une quelconque des revendications 7 ou 8, **caractérisé en ce que** ledit évidement à recevoir ladite sphère d'appui (12) est formé dans ladite plaque de serrage de garniture (3).

10. Frein à disque à renfort automatique selon une quelconque des revendications précédentes, **caractérisé en ce que** ladite plaque de guidage (9) présente un bord de cuve (15) de son côté en face de ladite garniture de frein (2), ce bord recouvrant une fente formée entre ladite plaque de guidage (9) et ladite garniture de frein (2), quand ledit appui écarteur (10) se trouve en sa position écartée fonctionnelle.

11. Frein à disque à renfort automatique selon une quelconque des revendications 7 à 10, **caractérisé en ce que** ledit système d'étanchéité est formé par une bague d'étanchéité (23) disposée sur ladite sphère d'appui (12).

12. Frein à disque à renfort automatique selon une quelconque des revendications précédentes, **caractérisé en ce que** ladite plaque de serrage de garniture (3) présente une saillie (17) à une partie de réception (18), dans laquelle ledit piston de frein (6) se trouve en prise et est tenu en position axiale.

13. Frein à disque à renfort automatique selon la revendication 12, **caractérisé en ce que** ladite partie de réception (18) présente une dépouille inverse (19), dans laquelle se trouve en prise une bague (20) dudit piston de frein (6).

14. Frein à disque à renfort automatique selon la revendication 13, **caractérisé en ce que** ladite bague (20) est conçue sous forme d'une rondelle élastique bombée.

15. Frein à disque à renfort automatique selon une quelconque des revendications 12 à 14, **caractérisé en ce que** ladite partie de réception (18) est munie d'une ouverture d'insertion (22) en entonnoir.

16. Frein à disque à renfort automatique selon une quelconque des revendications 14 ou 15, **caractérisé en ce que** ladite bague élastique (20) est insérée dans une rainure périphérique dudit piston de frein (6) pour un mouvement radial.
